(19) **Europäisches Patentamt / European Patent Office / Office européen des brevets**

(11) **EP 2 517 921 A2**

(12) # EUROPEAN PATENT APPLICATION

(43) Date of publication:
**31.10.2012 Bulletin 2012/44**

(21) Application number: **12164059.3**

(22) Date of filing: **13.04.2012**

(51) Int Cl.:
**B60L 11/02** *(2006.01)*  **B60L 11/00** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.04.2011 US 201113096551**

(71) Applicant: **DEERE & COMPANY**
**Moline, Illinois 61265-8098 (US)**

(72) Inventors:
• **West, Orrin B.**
**Fargo, ND North Dakota 58104 (US)**
• **Wu, Long**
**Fargo, ND North Dakota 58104 (US)**
• **Singh, Brij N.**
**West Fargo, ND 58078 (US)**
• **Vilar, Zimin W.**
**Dubuque, IA Iowa 52002 (US)**
• **Vilar, Eric**
**Dubuque, IA Iowa 52002 (US)**

(74) Representative: **Münch, Christian**
**Deere & Company**
**European Office**
**Global Intellectual Property Services**
**John-Deere-Straße 70**
**D-68163 Mannheim (DE)**

(54) **System and method for charging capacitors of an electric vehicle**

(57) An electric vehicle 10 is provided having an electric generator 36 and a motor 34. A voltage bus including a DC link 54 is configured to provide generated electrical energy to the motor 34. A controller 64 may estimate the charging current to a capacitor 56 of the voltage bus based on the current commanded from the generator 36 and the voltage measured across the capacitor 56. The controller 64 may adjust the charging rate of the capacitor 56 based on the estimated charging current.

FIG. 3

**Description**

Field

The present disclosure relates to a system and method for charging capacitors, and more particularly to an embedded system and method for testing and charging capacitors in a mobile system deployed in the field.

Background and Summary

Electric vehicles, such as hybrid vehicles or range extender vehicles, include one or more electric motors configured to drive a ground engaging mechanism of the vehicle. Electric vehicles typically include a generator driven by a prime mover, such as an engine, for generating electrical power used to drive the motor of the vehicle.

Some electric vehicles include a direct current (DC) link. One or more capacitors are coupled to the DC link to stabilize the voltage level of the DC link. The capacitors require recharging after using the vehicle or after the vehicle has not been used for an extended period. The capacitors and other components have current or voltage rate limits depending on the size and other specifications of the capacitors.

According to an embodiment of the present disclosure, a method of charging a capacitor of an electric vehicle is provided. The method includes the step of providing an electric vehicle having a chassis, a ground engaging mechanism configured to support the chassis, a motor configured to drive the ground engaging mechanism, a current source, a capacitor, an energy transfer device, and a controller configured to control the energy transfer device. The energy transfer device is configured to route electric current from the current source to the capacitor. The method includes routing electric current from the current source to the capacitor to charge the capacitor and monitoring a voltage of the capacitor to determine a voltage rate of change of the capacitor. The method further includes controlling the energy transfer device to hold the voltage rate of change of the capacitor at a substantially constant rate, determining a charging current of the capacitor, and at least one of decreasing the voltage rate of change of the capacitor and substantially halting the routing step upon the charging current exceeding a maximum current level.

According to another embodiment of the present disclosure, a method of charging a capacitor of an electric vehicle is provided. The method includes the step of providing an electric vehicle having a chassis, a ground engaging mechanism configured to support the chassis, a motor configured to drive the ground engaging mechanism, a current source, a capacitor, an energy transfer device, and a controller configured to control the energy transfer device. The energy transfer device is configured to route electric current from the current source to the capacitor. The method includes routing electric current from the current source to the capacitor to charge the capacitor and monitoring a voltage of the capacitor to determine a first charging rate of the capacitor. The method includes controlling a voltage rate of change of the capacitor such that the first charging rate is less than a maximum charging rate. The method further includes monitoring electric current provided from the current source to determine a second charging rate of the capacitor. The method further includes at least one of decreasing the voltage rate of change of the capacitor and substantially halting the routing step upon the second charging rate exceeding the maximum charging rate.

According to yet another embodiment of the present disclosure, an electric vehicle is provided including a chassis, a ground engaging mechanism configured to support the chassis, a current source configured to produce electric current, and a capacitor. An energy transfer device is configured to selectively route the electric current from the current source to the capacitor to charge the capacitor. A current sensor is configured to measure the electric current produced by the current source. A controller coupled to the current sensor and to the energy transfer device is configured to control the energy transfer device to charge the capacitor at a substantially constant rate of voltage change. The controller is configured to determine a charging current of the capacitor based on the measured electric current produced by the current source. The controller is configured to at least one of decrease the substantially constant rate of voltage change and to substantially block electric current to the capacitor upon the determined charging current exceeding a predetermined maximum current level.

Brief Description of the Drawings

The above-mentioned and other features and advantages of the invention, and the manner of attaining them, will become more apparent and the disclosure itself will be better understood by reference to the following description taken in conjunction with the accompanying drawings, wherein:

FIG. 1 illustrates an exemplary vehicle incorporating the charging system of the present disclosure;

FIG. 2 illustrates a representative view of an exemplary electric drive system of the vehicle of FIG. 1;

FIG. 3 illustrates a representative view of an exemplary charging system of the vehicle of FIG. 1 including a generator and a controller;

FIG. 4 illustrates the charging system of FIG. 3 including a capacitor coupled to a DC link;

FIG. 5 illustrates an exemplary method of charging the capacitor of FIG. 4; and

FIG. 6 illustrates an exemplary charging process of the capacitor of FIG. 4.

Corresponding reference characters indicate corresponding parts throughout the several views. The exemplifications set out herein illustrate exemplary embodiments of the invention, and such exemplifications are not to be construed as limiting the scope of the invention in any manner.

Detailed Description

The embodiments disclosed herein are not intended to be exhaustive or to limit the disclosure to the precise forms disclosed in the following detailed description. Rather, the embodiments are chosen and described so that others skilled in the art may utilize their teachings.

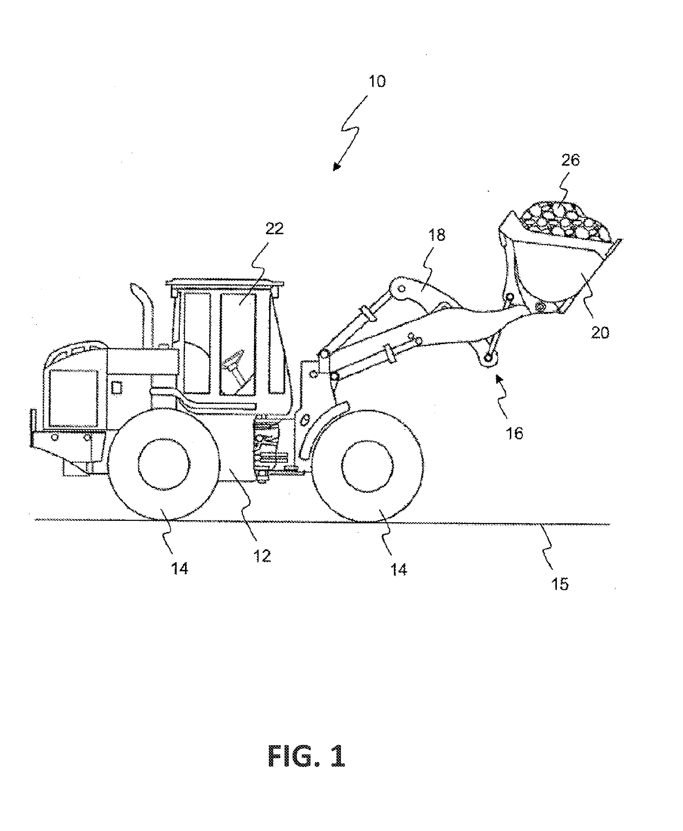

Referring to FIG. 1, an exemplary utility vehicle in the form of a loader 10 is illustrated. Although the utility vehicle is illustrated and described herein as loader 10, the utility vehicle 10 may include a motor grader, a tractor, a bulldozer, a feller buncher, a crawler, an excavator, a skidder, a forwarded, or another utility vehicle. Loader 10 includes a chassis 12 and a ground engaging mechanism 14. Ground engaging mechanism 14 is capable of supporting chassis 12 and propelling chassis 12 across the ground 15. Although the illustrated loader 10 includes wheels as ground engaging mechanism 14, loader 10 may include other ground engaging mechanisms, such as steel tracks, rubber tracks, or other suitable ground engaging members.

Loader 10 further includes a loader assembly 16. As illustrated in FIG. 1, loader assembly 16 includes a loader boom 18 and a work tool 20 in the form of a bucket. Work tool 20 may be capable of moving, excavating, plowing, or performing other material handling functions on a load 26, such as dirt or other materials. Other suitable work tools include, for example, blades, pallet forks, bail lifts, augers, harvesters, tillers, mowers, and grapples. Loader boom 18 is configured to move relative to chassis 12 to move and operate work tool 20. An operator controls the functions of loader 10, including ground engaging mechanism 14 and loader assembly 16, from an operator station 22 supported by chassis 12.

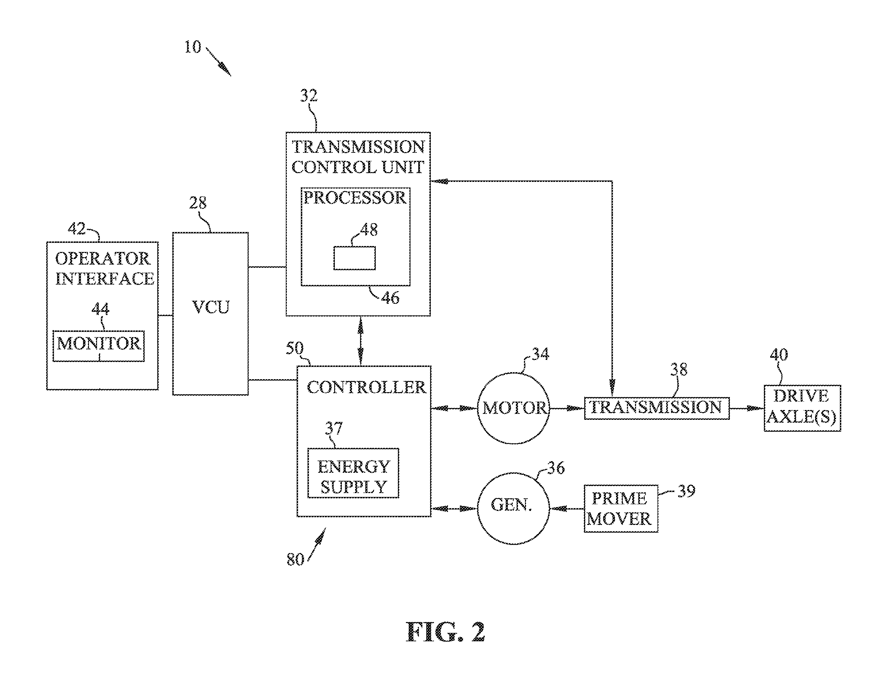

Referring to FIG. 2, vehicle 10 includes an electric drive system having a controller 50 configured to control one or more electric machines. Controller 50 may include multiple control units for controlling multiple electric machines. In the illustrated embodiment, controller 50 is an inverter system 50 configured to control a motor 34 and a generator 36, although additional or fewer electric machines may be controlled. Vehicle 10 illustratively includes a transmission control unit (TCU) 32 coupled to inverter 50 and to a transmission 38. TCU 32, which includes a processor 46 and software stored in a memory 48 of processor 46, is configured to receive user input and various vehicle parameters for controlling transmission 38 and for issuing electric machine commands to inverter 50 for controlling motor 34 and generator 36. For example, inverter 50 may provide vehicle parameters, such as electric machine speed feedback, to TCU 32. In one embodiment, transmission 38 may include a speed sensor providing transmission speed feedback to TCU 32. In one embodiment, TCU 32 uses closed-loop controls for providing electric machine commands to inverter 50.

Motor 34 is configured to drive a drive axle 40 of vehicle 10 through transmission 38. Additional motors 34 may be provided to drive one or more drive axles 40 of vehicle 10. In the illustrated embodiment, drive axle 40 drives a ground engaging mechanism 14. In one embodiment, vehicle 10 may not include a transmission 38, and motor 34 may be coupled to a final drive of ground engaging mechanism 14.

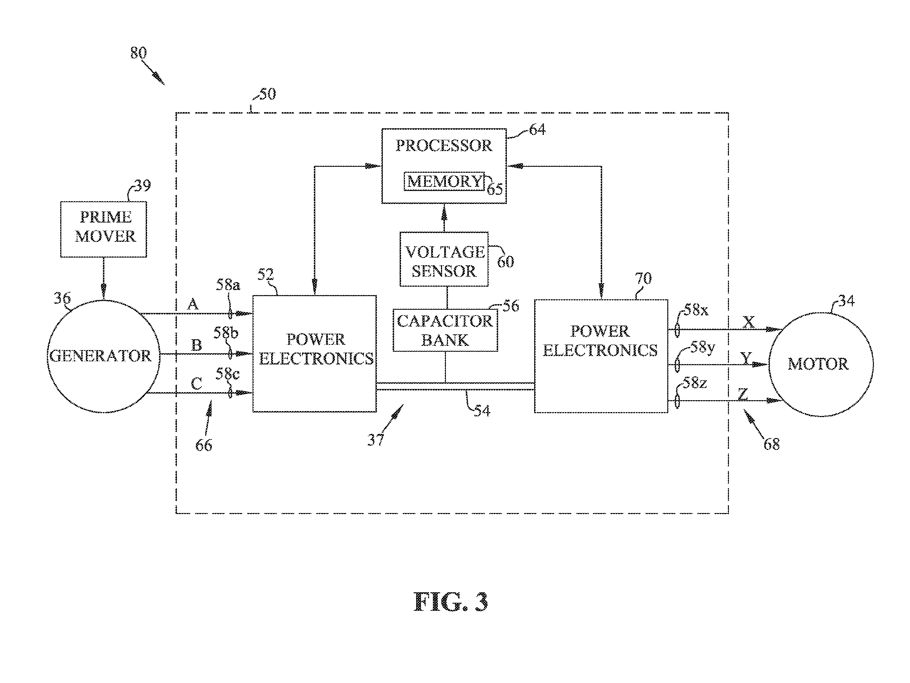

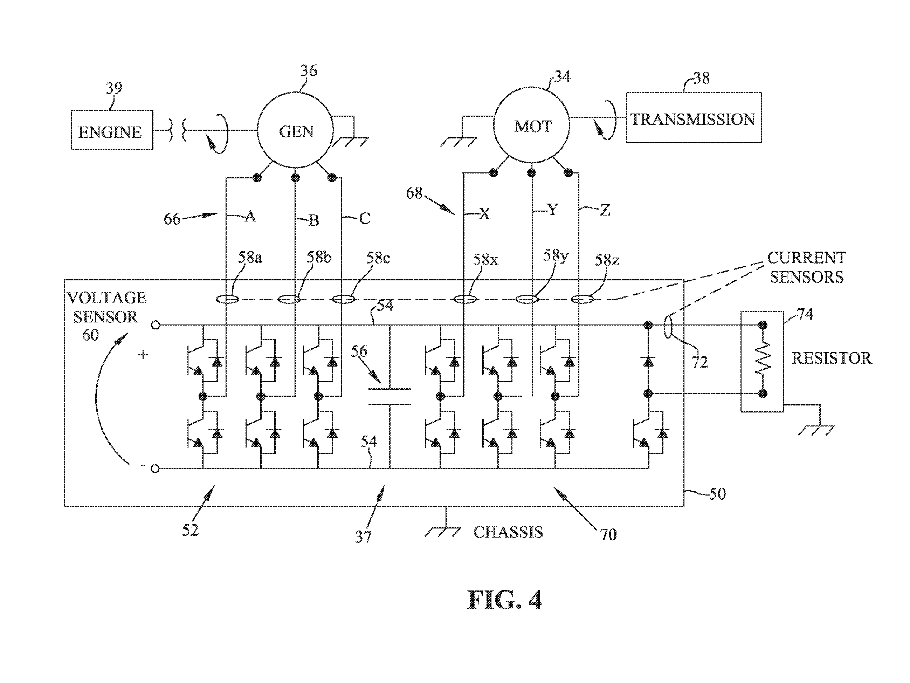

Generator 36 is coupled to a prime mover 39 and is configured to generate electrical power for use by vehicle 10. In particular, the rotation of prime mover 39 causes corresponding rotation of a rotor of generator 36, thereby generating electrical power through windings of generator 36. The generated power is routed to an energy supply device or system 37 of inverter 50. In one embodiment, energy supply 37 includes a capacitor bank 56 coupled to a DC link 54 (see FIG. 3) for supplying generated power to motor 34 and/or to other devices of the electric drive system, as illustrated in FIGS. 3 and 4 and described herein. Energy supply 37 may alternatively include a battery, fuel cell, and/or other energy storage or supply device and may be located external to inverter 50. Prime mover 39 is controlled by a controller, such as one of controllers 28, 32, 50. In one embodiment, prime mover 39 is a diesel engine, although other suitable prime movers may be used. In one embodiment, motor 34 and generator 36 include permanent magnet direct current (PMDC) machines, switched reluctance machines, or other suitable electric machines.

Vehicle 10 further includes an operator interface 42 providing an operator with inputs, feedback, and controls for vehicle 10. For example, operator interface 42 may include a steering device, a brake, an accelerator, a transmission shifter, and other input devices. Operator interface 42 may include a display providing various vehicle parameters such as vehicle speed, ground speed, and other parameters. In the illustrated embodiment, operator interface 42 includes a monitor 44 providing diagnostic information received from inverter 50 and/or TCU 32. In the illustrated embodiment, vehicle 10 further includes a vehicle control unit (VCU) 28 configured to drive the operator interface 42. For example, VCU 28 may provide vehicle speed, transmission gear data, vehicle temperature data, and other vehicle parameters to operator via monitor 44. In one embodiment, VCU 28 may provide operator inputs received from operator interface 42 to the appropriate controller 32, 50.

Referring to FIG. 3, prime mover 39, generator 36, and inverter 50 provide a charging system 80 for vehicle 10. In the illustrated embodiment, exemplary inverter 50 includes power electronics 52 configured to route electrical energy from generator 36 to DC link 54. Capacitors 56 establish potential on DC link 54 and serve as energy buffers to stabilize DC link 54 at a predetermined voltage level. In one embodiment, DC link 54 is maintained at a voltage level of 700 VDC, although other voltage levels may be implemented. Power electronics 52 serve as a power converter for converting the AC power provided with generator 36 to DC power placed on DC link 54. Inverter 50 further includes power electronics 70 configured to direct the power on DC link 54 to motor 34. In the illustrative embodiment, power electronics 52 receive AC power from generator 36 over three-phase power lines 66 and direct rectified DC power to capacitors 56. Power lines 66 illustratively include a first phase line A, a second phase line B, and a third phase line C. Similarly, power electronics 70 direct inverted AC power to motor 34 over three phase power lines 68. Power lines 68 illustratively include a first phase line X, a second phase line Y, and a third phase line Z. Other suitable drivers may be used to route power to electric machines 34, 36.

Inverter 50 further includes a processor 64 and a memory 65 internal or external to processor 64. Processor 64 is configured to control power electronics 52, 70 for routing current to and from DC link 54 and capacitors 56. In one embodiment, TCU 32 provides controls and other parameters to processor 64 for controlling power electronics 52, 70. Inverter 50 may alternatively include multiple processors 64 configured to control power electronics 52, 70. In one embodiment, eight capacitors 56 are provided, although fewer or additional capacitors may be used. In one embodiment, capacitors 56 include four parallel sets of capacitors 56, and each set of capacitors 56 includes two capacitors 56 in series. In one embodiment, each set of capacitors 56 in series has a voltage capacity of about 900 V. In one embodiment, each capacitor 56 is about 10 milli-Farads. Exemplary capacitors 56 include 450 V aluminum electrolytic capacitors available from EPCOS, United Chemi-Con, Cornell Dubilier, or AVX. In the illustrated embodiment, a voltage sensor 60 is coupled to capacitor bank 56 for measuring the voltage across capacitor bank 56 (i.e., the voltage on DC link 54) and providing a signal representative of the measured voltage to processor 64.

Referring to FIG. 4, power electronics 52, 70 include a plurality of switch devices, illustratively power semiconductors 52, 70, feeding into DC link 54. For illustrative purposes, capacitor bank 56 is represented as a single capacitor in FIG. 4. In the illustrated embodiment, power semiconductors 52, 70 include insulated-gate bipolar transistors (IGBT's) controlled by processor 64 and configured to control the flow of current provided with generator 36 to DC link 54 and to motor 34. In one embodiment, three IGBT modules (i.e., one IGBT module for each phase A, B, C) are provided for controlling current from generator 36 to DC link 54, and three IGBT modules (i.e., one IGBT module for each phase X, Y, Z) are provided for controlling current from DC link 54 to motor 34. Each IGBT module illustratively includes two IGBT switches, including a switch coupled to the high voltage side of DC link 54 and a switch coupled to the low voltage side of DC link 54. Inverter 50 is configured to switch the IGBT's between an "on" state and an "off" state to control the current flow to and from capacitors 56. Alternatively, power semiconductors 52, 70 may include power MOSFET devices or other suitable power converters and switches. In one embodiment, power semiconductors 52 provide a three-phase AC bridge or boost rectifier for power generated with generator 36. In one embodiment, inverter 50 includes a metal enclosure for housing the components of inverter 50.

One or more resistors 74 are coupled across power semiconductors 70. For illustrative purposes, resistor 74 is represented as a single resistor in FIG. 4. In one embodiment, resistor 74 includes a brake resistor configured to absorb excess energy generated from motor 34 upon motor 34 reducing speed and to dissipate the excess energy into heat. A current sensor 72 may be used to measure the excess current transferred to resistor 74. In one embodiment, resistor 74 is rated at 100 kiloWatts continuous power. In one embodiment, resistors 74 include one or more bleed resistors configured to draw current from capacitor bank 56.

As illustrated in FIGS. 3 and 4, each phase of power lines 66 includes a current sensor 58 for measuring the current through power lines 66. In particular, a current sensor 58a is coupled to first phase line A, a current sensor 58b is coupled to second phase line B, and a current sensor 58c is coupled to third phase line C. Similarly, power lines 68 also include current sensors 58. A current sensor 58x is coupled to first phase line X, a current sensor 58y is coupled to second phase line Y, and a current sensor 58z is coupled to third phase line Z. In one embodiment, current sensors 58 provide feedback signals to processor 64 indicative of the measured current through the respective power line 66, 68. In the illustrated embodiment, current sensors 58 are internal to the housing of inverter 50. An exemplary current sensor 58 is an open loop Hall effect current transducer available from LEM.

Charging system 80 of FIG. 3 is configured to charge capacitors 56 to an operating potential at a controlled charging rate, as described herein. In one embodiment, charging system 80 automatically charges capacitors 56 upon startup of vehicle 10. For example, charging system 80 may implement an automatic charging routine upon an operator activating power to the electric drive system of vehicle 10. Charging system 80 may also charge capacitors 56 in other conditions, such as on command by an operator or upon the voltage across capacitors 56 reaching a minimum level, for example. In the illustrated embodiment, inverter 50 monitors and limits the charging current of capacitors 56 to reduce the likelihood of damaging capacitors 56 during a recharge.

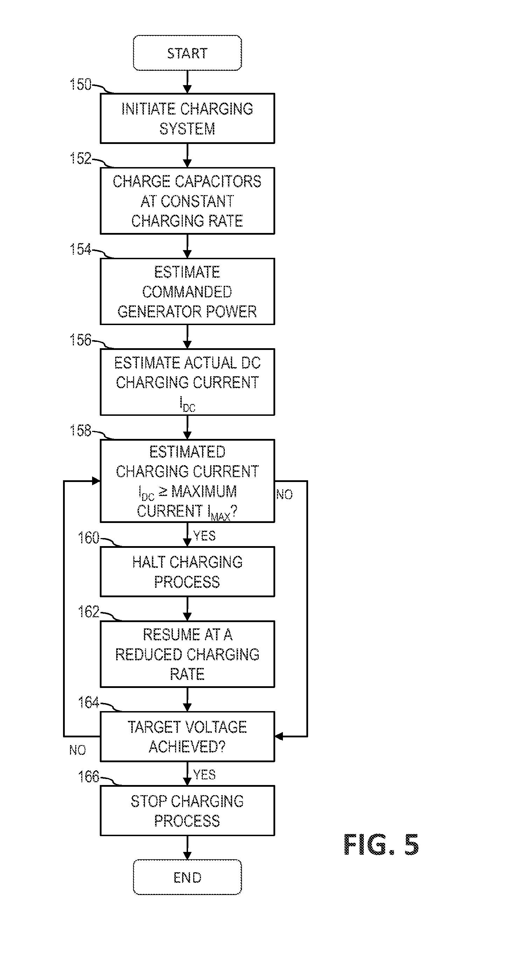

Referring to FIG. 5, an exemplary method of charging capacitors 56 is illustrated. At block 150, charging system 80 is initiated. In one embodiment, an operator activates power to the electric drive system of vehicle 10 (i.e. TCU 32, inverter 50, and/or user interface 42, etc.) to initiate the charging process. At block 152, capacitors 56 are charged at a substantially fixed charging rate or current. The fixed charging rate is controlled based on setting a substantially constant rate of change of the voltage across capacitor bank 56. In one embodiment, processor 64 sets the voltage change rate of capacitors 56 to a certain maximum limit to facilitate holding the charging current flowing through capacitors 56 below a certain value. Further, inverter 50 monitors the voltage across capacitors 56 measured with voltage sensor 60 (see FIG. 3) and employs closed loop controls to keep the rate of change of the voltage across capacitors 56 substantially at the predetermined fixed rate.

The theoretical mean charging rate or current flowing into capacitor bank 56 may be represented as:

$$I_C = C \frac{\Delta V}{\Delta t} \qquad (1)$$

wherein C is the capacitance (in Farads) of capacitor bank 56, $\Delta V$ is the change in voltage (in volts) across the capacitor, $\Delta t$ is the change in time (in seconds) corresponding to the change in voltage $\Delta V$, and $I_C$ is the theoretical mean current (in amperes) flowing into capacitor bank 56. As such, $\Delta V/\Delta t$ is the rate of change of the voltage across capacitor bank 56, and $I_C$ is the theoretical charging rate of capacitors 56 based on the voltage rate of change $\Delta V/\Delta t$. With C fixed, $\Delta V/\Delta t$ is held at a predetermined fixed rate such that the voltage increase across capacitor bank 56 is substantially linear. Based on voltage feedback provided with sensor 60, inverter 50 calculates the actual rate of change of voltage $\Delta V/\Delta t$ across capacitors 56 and maintains the actual rate $\Delta V/\Delta t$ at or around the predetermined fixed rate $\Delta V/\Delta t$. As such, maintaining a substantially fixed voltage rate $\Delta V/\Delta t$ facilitates holding the capacitor charging current below a maximum charging rate or current $I_{MAX}$. The maximum current $I_{MAX}$ may be set based on manufacturer specifications of capacitors 56 or determined empirically by testing capacitors 56.

The predetermined voltage rate of change $\Delta V/\Delta t$ may be implemented with processor 64 and power semiconductors 52. In one embodiment, TCU 32 provides an input to processor 64 identifying a setpoint voltage rate of change $\Delta V/\Delta t$. In turn, inverter 50 stores the setpoint $\Delta V/\Delta t$ in memory 65, monitors the measured voltage across capacitors 56, and controls power semiconductors 52 to hold the actual voltage rate of change $\Delta V/\Delta t$ at or near the setpoint. In particular, inverter 50 selectively activates and deactivates the IGBT's of power semiconductors 52 to provide DC current to capacitors 56 configured to increase the voltage across capacitors 56 at a substantially linear rate according to the setpoint $\Delta V/\Delta t$. The setpoint $\Delta V/\Delta t$ may be any suitable voltage rate, such as 250 VDC per second, 500 VDC per second, 700 VDC per second, or 1000 VDC per second, for example.

Referring still to FIG. 5, at blocks 154 and 156 the capacitor charging current is further estimated based on the current provided from generator 36 and measured with current sensors 58. Referring first to block 154, the power commanded from generator 36 is estimated based on the three-phase current flowing through power lines 66 measured with sensors 58a, 58b, 58c (see FIG. 3). In the illustrated embodiment, the power calculation is implemented by transforming the three-phase AC quantities of the measured generator current into two DC quantities using a direct-quadrature ("dq") transformation. In particular, the commanded power from generator 36 may be represented as:

$$P_{gen} = \frac{3}{2}(I_d V_d + I_q V_q) \qquad (2)$$

wherein $P_{gen}$ is the estimated commanded power from generator 36 (in watts), $I_d$ is the measured direct axis current (in amps), $I_q$ is the measured quadrature axis current (in amps), $V_d$ is the commanded direct axis voltage (in volts), and Vq is the commanded quadrature axis voltage (in volts). Based on the three-phase AC current values flowing through power lines 66 measured with sensors 58a, 58b, 58c, the quadrature and direct axis current values $I_q$ and $I_d$ and the quadrature and direct axis voltage values Vq and $V_d$ are calculated using a direct-quadrature transform. The quadrature and direct axis voltage and current values are used to estimate the commanded power $P_{gen}$ from generator 36 according to Equation (2).

At block 156, the actual DC charging current of capacitors 56 is estimated based on the estimated commanded power determined at block 154 and the voltage measured across capacitor bank 56. In particular, the power generated by generator 36 flows to capacitor bank 56 during the charging process. As such, due to power conservation, the power generated by generator 36 and provided to the input of power semiconductors 52 is approximately equal to the rectified power at the output of power semiconductors 52. As such, the DC charging current flowing into capacitors 56 and DC link 54 may be estimated based on the estimated power at the input of power semiconductors 52 (calculated at block 154) and the measured voltage at the output of power semiconductors 52 (measured with voltage sensor 60). The estimated DC charging current may be represented as:

$$I_{DC} = \frac{P_{gen}}{V_{DC}} \qquad\qquad (3)$$

wherein $I_{DC}$ is the approximate DC current flowing into capacitors 56 (and DC link 54), $P_{gen}$ is the commanded power from generator 36 determined with Equation (2), and $V_{DC}$ is the voltage measured across capacitors 56.

With Equation (3), an approximate capacitor charging current $I_{DC}$ is determined based on the voltage measured across capacitor bank 56 and the estimated generator power determined with the phase current measurements. With Equation (1), the theoretical capacitor charging current $I_C$ is determined based on the monitored and controlled voltage rate of change $\Delta V/\Delta t$ across capacitor bank 56. In one embodiment, during an initial charging of capacitor bank 56, the estimated charging current $I_{DC}$ is approximately equal to the theoretical charging current $I_C$ calculated at block 152. In some instances, such as with electrolytic capacitors 56 for example, the estimated charging current $I_{DC}$ diverges from the theoretical charging current $I_C$. In one embodiment, this divergence is the result of degraded leakage current properties of the capacitors 56 as a function of voltage due to aging or long-term storage.

At block 158, the calculated charging current $I_{DC}$ is compared to the maximum charging current threshold $I_{MAX}$ (described above). If the calculated charging current $I_{DC}$ does not exceed $I_{MAX}$, capacitors 56 are charged until the target voltage or charge is reached, as represented by block 164. If the calculated charging current $I_{DC}$ reaches or exceeds $I_{MAX}$ during the charging process, a fault is initiated and the charging process is halted to reduce the likelihood of damaging capacitors 56, as represented by block 160. In the illustrated embodiment, capacitors 56 passively discharge at block 160 through one or more bleed resistors coupled across capacitor bank 56 to a predetermined voltage level. In one embodiment, capacitors 56 discharge through bleed resistors until the measured voltage across capacitors 56 has reduced by approximately 25 percent of the voltage level when the fault occurred, although other suitable voltage levels may be used. The bleed resistors may include resistor 74 illustrated in FIG. 4. In one embodiment, the bleed resistors have a resistance of about 20 kilo-ohms.

Upon capacitors 56 discharging to the predetermined voltage level, the charging process resumes at block 162 at a reduced charging rate. In particular, the rate of change of voltage $\Delta V/\Delta t$ is set to a lower rate such that the capacitor charging current $I_{DC}$ is reduced. In one embodiment, $\Delta V/\Delta t$ is reduced by about 50 percent at block 162. In one embodiment, $\Delta V/\Delta t$ is reduced by about 30 percent. Other suitable voltage rates $\Delta V/\Delta t$ may be used at block 162. Capacitors 56 are charged at the reduced charging rate until the target voltage or charge is reached or until the calculated charging current $I_{DC}$ again reaches or exceeds $I_{MAX}$, as represented by blocks 164 and 166.

In one embodiment, capacitors 56 may experience oxide degeneration on the capacitor plates when stored with minimal or no use for an extended period. For example, the oxide layer on an electrode of an electrolytic capacitor may degrade when the electrolytic capacitor is stored at room temperature for an extended period or at an elevated temperature for a shorter period. Such oxide degeneration causes increased leakage current properties of the electrolytic capacitor, thereby creating "voids" in the dielectric of the capacitor and reducing the capacitance and/or voltage rating of the capacitor. In one embodiment, capacitors 56 are electrolytic capacitors that include aluminum electrodes, although other suitable capacitor configurations may be provided. In one embodiment, charging capacitors 56 with the method of FIG. 5 facilitates the chemical restoration of the capacitor electrodes by building up the oxide layer on the electrode. For example, the reduced charging rate provided at block 162 of FIG. 5 may facilitate the buildup of the oxide layer by allowing the capacitor 56 to charge over a longer period.

In one embodiment, at least a portion of the method of FIG. 5 is included in control software stored in memory 65 (see FIG. 3) of inverter 50. For example, the steps identified in blocks 150 through 166 may be implemented by processor 64 with control software stored in memory 65. In one embodiment, TCU 32 and inverter 50 may cooperate to control charging system 80 and implement the method of FIG. 5.

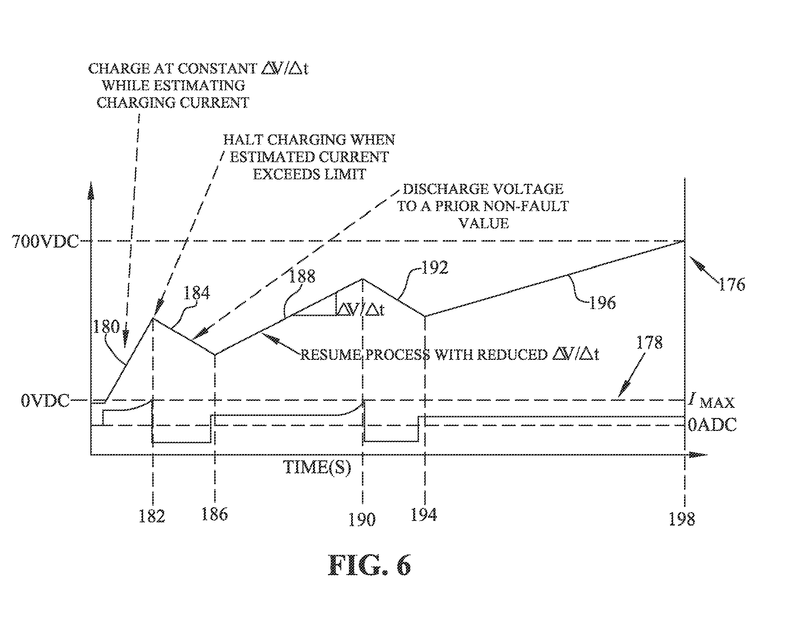

Referring to FIG. 6, an exemplary charging process is illustrated according to the method of FIG. 5. Line 176 represents the voltage across capacitor bank 56 during the charging process. Line 178 represents the estimated charging current $I_{DC}$ provided to capacitors 56 during the charging process. The target voltage of capacitors 56 is illustratively 700 VDC. At portion 180 of line 176, capacitors 56 are charged at a constant $\Delta V/\Delta t$, represented by the slope of portion 180. At time 182, the estimated current $I_{DC}$ increases to $I_{MAX}$, and the charging process is halted. The voltage across capacitor bank 56 discharges through bleed resistors at portion 184 until the capacitor voltage reaches a predetermined voltage level at time 186. At time 186, the charging process is resumed at a reduced voltage rate $\Delta V/\Delta t$ over portion 188, and the charging current $I_{DC}$ remains substantially constant. At time 190, the estimated charging current $I_{DC}$ again increases to the predetermined maximum current $I_{MAX}$, and the charging process is halted. Charging current is removed and the voltage across capacitor bank 56 discharges through bleed resistors at portion 192 until the capacitor voltage reaches a predetermined voltage level at time 194. At time 194, the charging process is resumed at a reduced voltage rate $\Delta V/\Delta t$ over portion 196, and the charging current $I_{DC}$ remains substantially constant until the target voltage level is reached across capacitor bank 56 at time 198.

While charging system 88 is described in conjunction with a utility vehicle, the system may also be used on any electric vehicle, mobile electrical system, or other electrical system requiring the charging of capacitors. Further, charging system 88 may also be used for charging a battery to reduce the likelihood of exceeding a maximum charging current and causing damage to the battery.

While this invention has been described as having preferred designs, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this disclosure pertains and which fall within the limits of the appended claims.

**Claims**

1. A method of charging a capacitor (56) of an electric vehicle (10), the method including the steps of:

   providing an electric vehicle (10) having a chassis (12), a ground engaging mechanism (14) configured to support the chassis (12), a motor (34) configured to drive the ground engaging mechanism (14), a current source (36), a capacitor (56), an energy transfer device (52), and a controller (64) configured to control the energy transfer device (52), the energy transfer device (52) being configured to route electric current from the current source (36) to the capacitor (56);
   routing electric current from the current source (36) to the capacitor (56) to charge the capacitor (56);
   monitoring a voltage of the capacitor (56) to determine a voltage rate of change of the capacitor (56);
   controlling the energy transfer device (52) to hold the voltage rate of change of the capacitor (56) at a substantially constant rate;
   determining a charging current of the capacitor (56); and
   at least one of decreasing the voltage rate of change of the capacitor (56) and substantially halting the routing step upon the charging current exceeding a maximum current level.

2. The method of claim 1, wherein the substantially constant rate of the voltage rate of change is determined based on the maximum current level.

3. The method of claim 1, further including the step of monitoring electric current provided from the current source (36), the determining step being based on the monitored electric current.

4. The method of claim 2, wherein the energy transfer device (52) has an input (66) coupled to the current source (36) and an output coupled to the capacitor (56), wherein the electric current is monitored at the input (66) of the energy transfer device (52), wherein the charging current flows from the output of the energy transfer device (52) to the capacitor (56).

5. The method of claim 4, wherein the determining step includes calculating power commanded from the current source (36) based on the monitored electric current and determining the charging current based on the calculated power and the monitored voltage of the capacitor (56).

6. The method of claim 5, wherein the monitored electric current is provided to the energy transfer device (52) over a three-phase configuration (A, B, C), wherein a current sensor (58a, 58b, 58c) is provided at each phase (A, B, C) to measure each phase (A, B, C) of the electric current, wherein the power commanded from the current source (36) is calculated based on a direct-quadrature transformation of the measured electric current.

7. The method of claim 1, further including providing a direct current link (54) coupled to the capacitor (56) and a motor (34) coupled to the direct current link (54), the capacitor (56) being configured to stabilize a voltage level of the direct current link (54).

8. The method of claim 1, wherein the energy transfer device includes at least one power semiconductor (52) controlled by the controller (64) and the current source includes an electric generator (36).

9. The method of claim 1, wherein the routing step is substantially halted and the voltage rate of change of the capacitor (56) is decreased to a second substantially constant rate upon the charging current exceeding the maximum current level, further including the step of resuming the routing step upon the monitored voltage of the capacitor (56) decreasing to a predetermined threshold voltage level.

10. The method of claim 1, further including the steps of:

monitoring the voltage of the capacitor (56) to determine a first charging rate of the capacitor (56);
controlling the voltage rate of change of the capacitor (56) such that the first charging rate is less than a maximum charging rate;
monitoring electric current provided from the current source (36) to determine a second charging rate of the capacitor (56); and
at least one of decreasing the voltage rate of change of the capacitor (56) and substantially halting the routing step upon the second charging rate exceeding the maximum charging rate.

11. The method of claim 10, wherein the second monitoring step includes calculating power commanded from the current source (36) based on the monitored electric current and determining the second charging rate based on the calculated power and the monitored voltage of the capacitor (56).

12. An electric vehicle (10) including:

a chassis (12);
a ground engaging mechanism (14) configured to support the chassis (12);
a current source (36) configured to produce electric current;
a capacitor (56);
an energy transfer device (52) configured to selectively route the electric current from the current source (36) to the capacitor (56) to charge the capacitor (56);
a current sensor (58a, 58b, 58c) configured to measure the electric current produced by the current source (36); and
a controller (64) coupled to the current sensor (58a, 58b, 58c) and to the energy transfer device (52), the controller (64) being configured to control the energy transfer device (52) to charge the capacitor (56) at a substantially constant rate of voltage change, the controller (64) being configured to determine a charging current of the capacitor (56) based on the measured electric current produced by the current source (36), the controller (64) being configured to at least one of decrease the substantially constant rate of voltage change and to substantially block electric current to the capacitor (56) upon the determined charging current exceeding a predetermined maximum current level.

13. The electric vehicle of claim 12, further including a voltage sensor (60) configured to measure a voltage of the capacitor (56), the voltage sensor (60) being in communication with the controller (64).

14. The electric vehicle of claim 13, wherein the controller (64) is configured to control the energy transfer device (52) to charge the capacitor (56) at the substantially constant rate of voltage change based on the measured voltage of the capacitor (56) and the predetermined maximum current level.

15. The electric vehicle of claim 13, wherein the controller (64) is configured to calculate power commanded from the current source (36) based on the measured electric current and to determine the charging current based on the calculated power and the measured voltage.

16. The electric vehicle of claim 12, wherein the measured electric current flows from the current source (36) to the energy transfer device (52) and the charging current flows from the energy transfer device (52) to the capacitor (56).

**FIG. 1**

FIG. 2

FIG. 3

FIG. 4

EP 2 517 921 A2

START

150 — INITIATE CHARGING SYSTEM

152 — CHARGE CAPACITORS AT CONSTANT CHARGING RATE

154 — ESTIMATE COMMANDED GENERATOR POWER

156 — ESTIMATE ACTUAL DC CHARGING CURRENT $I_{DC}$

158 — ESTIMATED CHARGING CURRENT $I_{DC} \geq$ MAXIMUM CURRENT $I_{MAX}$?

NO

YES

160 — HALT CHARGING PROCESS

162 — RESUME AT A REDUCED CHARGING RATE

164 — TARGET VOLTAGE ACHIEVED?

NO

YES

166 — STOP CHARGING PROCESS

END

**FIG. 5**

**FIG. 6**

EP 2 517 921 A2